# EUROPÄISCHE PATENTSCHRIFT

(11) **EP 2 246 942 B1**
(45) Veröffentlichungstag und Bekanntmachung des Hinweises auf die Patenterteilung: **10.07.2013**
(21) Anmeldenummer: 10003754.8
(22) Anmeldetag: 08.04.2010
(51) Int. Cl.: H01R 13/717, H01R 13/66, H01R 13/655

(54) **Elektrische Steckdose mit Klappdeckel**
Electric socket with flap lid
Prise électrique dotée d'un couvercle rabattable

(30) Priorität: 28.04.2009 DE 102009019264
(43) Veröffentlichungstag der Anmeldung: 03.11.2010
(73) Patentinhaber: ABB AG, 68309 Mannheim (DE)
(72) Erfinder: Schallenberg, Wolfgang, Dipl.-Ing., 40599 Düsseldorf (DE); Wieske, Stefan, Dipl.-Ing., 58285 Gevelsberg (DE); Zapp, Robert, Dipl.-Ing., 58579 Schalksmühle (DE)

(56) Entgegenhaltungen:
- EP-A1- 1 610 422
- DE-B3-102007 018 177
- DE-U1-202006 006 105

## Beschreibung

### Beschreibung

Die Erfindung betrifft eine elektrische Steckdose mit Klappdeckel und kann insbesondere bei Unterputz-Schutzkontaktsteckdosen verwendet werden.

Aus der DE 10 2007 018 177 B3 ist eine Steckdose mit Orientierungsbeleuchtung bekannt
- mit einer einen Steckdosentopf aufweisenden Zentralscheibe, deren Frontseite einen zugeordneten Abdeckrahmen um ein vorgegebenes Maß überragt und welche eine seitliche Lichtaustrittsöffnung aufweist,
- mit einem mit der Zentralscheibe verbundenen Gerätesockel, an welchem ein separates, an dessen Bodenseite angeordnetes Leuchtmittelmodul montiert ist, welches in seinem Innenraum mindestens eine Leuchtdiode mit zugeordneter Lichtaustrittsöffnung sowie Energieversorgungsmittel für die Speisung dieses Lichtmittels aufweist,
- und mit einem Lichtleiter, dessen Lichteintrittsfläche über die Lichtaustrittsöffnung des Leuchtmittelmoduls angeordnet ist und dessen Lichtaustrittsfläche in die seitliche Lichtaustrittsöffnung der Zentralscheibe greift.

Bei einer solchen Steckdose mit Orientierungsbeleuchtung wird der Weg zur Steckdose bzw. der Weg zu einem sich in der Nähe der Steckdose befindlichen Objekt - wie beispielsweise einer Tür - erhellt, wodurch z. B. auf dem Fußboden liegende Gegenstände erkannt werden können und die Stolpergefahr gebannt wird.

Der Erfindung liegt die Aufgabe zugrunde, eine Orientierungsbeleuchtung bei einer elektrischen Steckdose mit Klappdeckel zu realisieren.

Diese Aufgabe wird erfindungsgemäß gelöst durch eine elektrische Steckdose mit Klappdeckel,
a) wobei mindestens eine Lichtquelle im Klappdeckel eingebaut ist,
b) wobei die Energieversorgung der mindestens einen Lichtquelle mit Hilfe einer einen Primärkreis und einen Sekundärkreis aufweisenden induktiven Energieübertragungseinrichtung erfolgt,
c) wobei der Primärkreis der induktiven Energieübertragungseinrichtung im Steckdoseneinsatz montiert ist und eine über einen elektronischen Schalter mit einer hochfrequenten Spannung beaufschlagte Sendespule aufweist,
d) wobei der Sekundärkreis der induktiven Energieübertragungseinrichtung im Klappdeckel montiert ist und eine Empfangsspule aufweist, an deren Klemmen eine über eine Gleichrichterdiode gleichzurichtende Spannung zur Speisung der mindestens einen Lichtquelle abgreifbar ist.

Die mit der Erfindung erzielbaren Vorteile bestehen insbesondere darin, dass die elektrische Sicherheit des Installationsgerätes sehr hoch ist und in keiner Weise z. B. durch über die üblicherweise sehr klein dimensionierten Klappdeckel-Befestigungen (Scharniergelenke) zu führende elektrische Versorgungsleitungen beeinträchtigt wird. Derartige elektrische Versorgungsleitungen sind durch häufiges Auf- und Zuklappen des Klappdeckels bruchgefährdet. Auch ergibt sich nicht das Problem des Anschlusses solcher elektrischer Versorgungsleitungen zwischen Klappdeckel und Steckdoseneinsatz. Der normativ geforderte Berührungsschutz ist in sehr einfacher Art und Weise einzuhalten.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: eine perspektivische Ansicht einer elektrischen Steckdose mit Klappde- ckel bei teilweise geschnittenem Zustand,
- Fig. 2: eine perspektivische Ansicht einer elektrischen Steckdose mit Klappde- ckel bei geschlossenem Zustand,
- Fig. 3: eine perspektivische Ansicht einer elektrischen Steckdose mit Klappde- ckel bei geöffnetem Zustand,
- Fig. 4: eine perspektivische Ansicht eines Steckdoseneinsatzes,
- Fig. 5: eine perspektivische Ansicht eines Steckdoseneinsatzes bei teilweise ge- schnittenem Zustand,
- Fig. 6: ein Gehäuse der Primär-Elektronik-Baugruppe,
- Fig. 7: wesentliche Baukomponenten der Primär-Elektronik-Baugruppe,
- Fig. 8: einen Schnitt durch einen Steckdoseneinsatz,
- Fig. 9: eine perspektivische Ansicht der Oberseite eines Klappdeckels,
- Fig. 10: eine perspektivische Ansicht der Unterseite eines Klappdeckels,
- Fig. 11: eine perspektivische Ansicht der Unterseite eines Klappdeckels bei geöff- netem Gehäuse der Sekundär-Elektronik-Baugruppe,
- Fig. 12: wesentliche Baukomponenten der Sekundär-Elektronik-Baugruppe,
- Fig. 13: einen Schnitt durch eine elektrische Steckdose mit Klappdeckel,
- Fig. 14: eine perspektivische Ansicht einer elektrischen Steckdose mit Klappde- ckel bei entferntem Abdeckrahmen und teilweise geschnittenem Zustand,
- Fig. 15: eine Prinzip-Schaltskizze der induktiven Energieübertragungseinrichtung zwischen einem Primärkreis des Steckdoseneinsatzes und einem Sekun- därkreis des Klappdeckels.

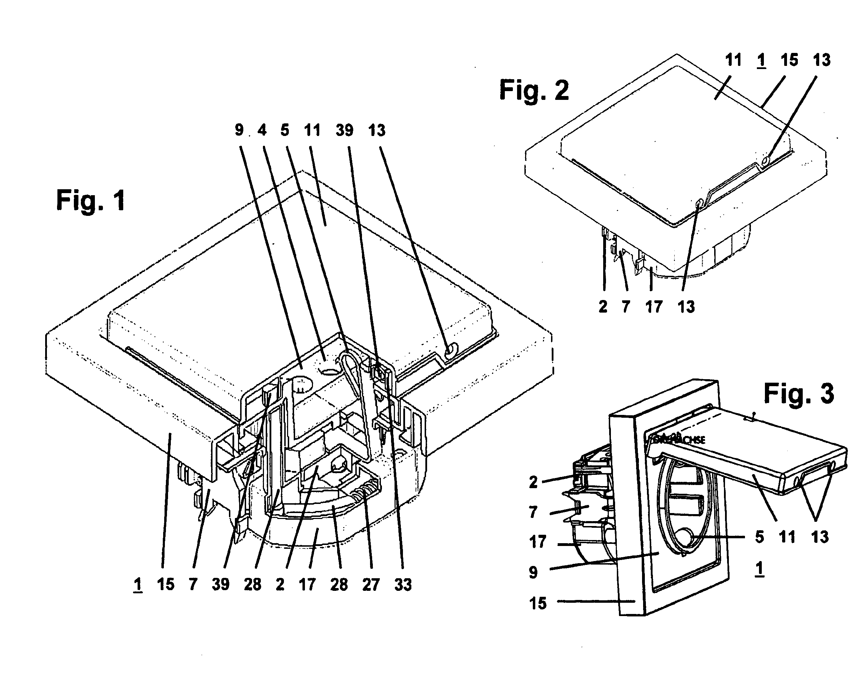

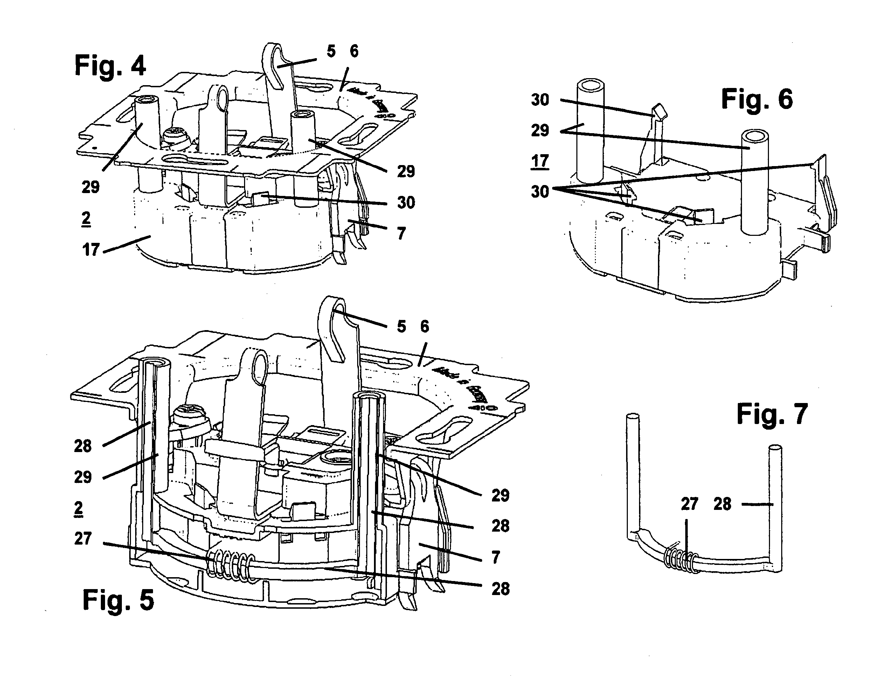

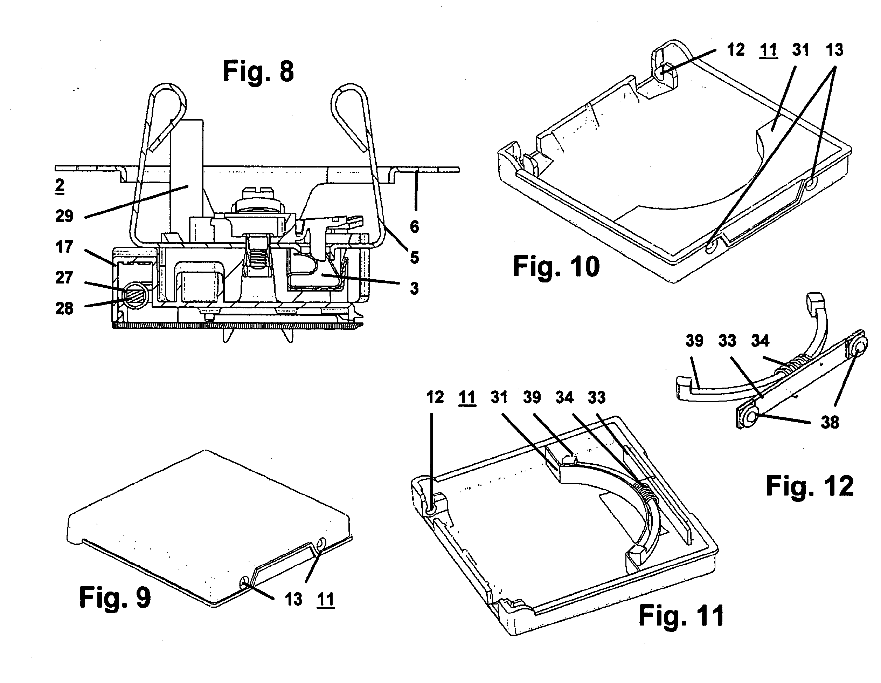

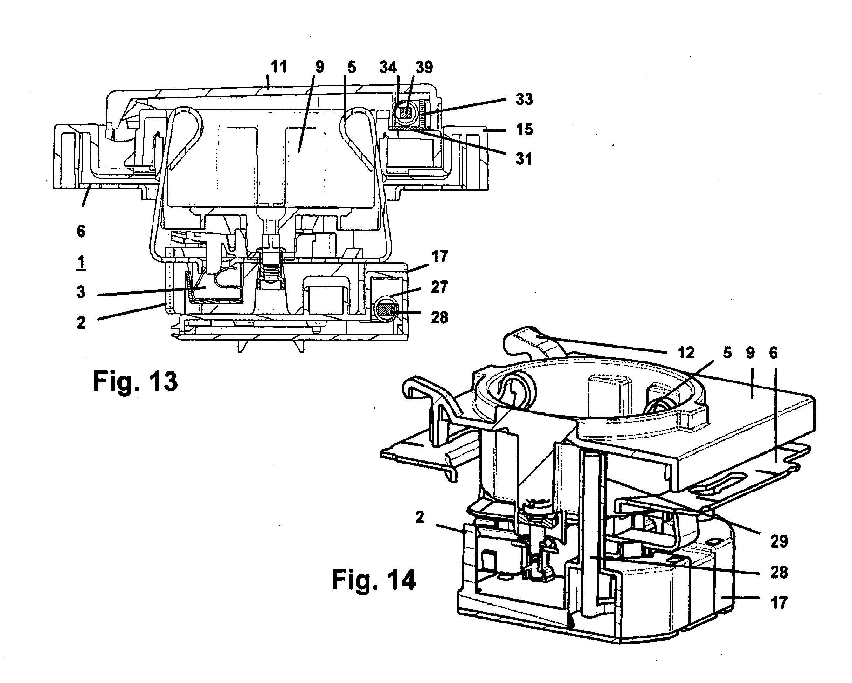

In Fig. 1 ist eine perspektivische Ansicht einer elektrischen Steckdose mit Klappdeckel bei teilweise geschnittenem Zustand dargestellt. Wesentliche Baukomponente der elektrischen Steckdose 1 ist ein Steckdoseneinsatz 2, welcher in bekannter Art und Weise elektrische Anschlussklemmen 3 (siehe die Figuren 8 und 13) für ein Wechselspannungsnetz (Phase, Nulleiter, Schutzleiter), Erdungsbügel 5, einen Tragring 6 (siehe die Figuren 4, 5, 8, 13, 14) und Spreizkrallen 7 aufweist. Die Frontseite des Steckdoseneinsatzes 2 wird abgedeckt mittels einer Zentralscheibe 9 inklusive Steckdosentopf mit eingebrachten Steckbuchsen 4 zur Einführung der Steckkontakte eines handelsüblichen Steckers. Die Steckdose 1 wird komplettiert durch einen Klappdeckel 11 und einen Abdeckrahmen 15.

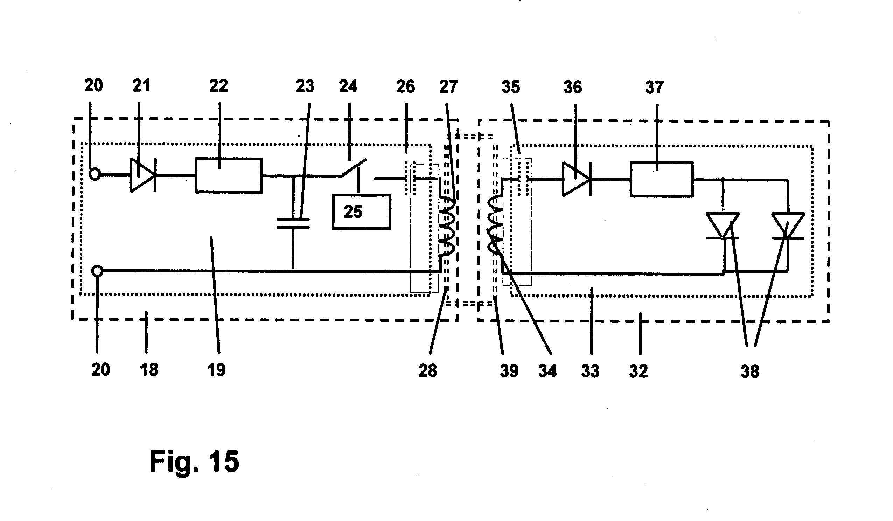

Zur Realisierung einer Orientierungsbeleuchtung dient eine induktive Energieübertragungseinrichtung zwischen einem Primärkreis des Steckdoseneinsatzes 2 und einem Sekundärkreis des Klappdeckels 11. Der am Steckdoseneinsatz 2 befestigte Primärkreis befindet sich in einem Gehäuse 17 der Primär-Elektronik-Baugruppe 18 (siehe Fig. 15). Als wesentliche Baukomponente dieser Primär-Elektronik-Baugruppe 18 ist in Fig. 1 eine einen Ferritkernabschnitt 28 umfassende Sendespule 27 gezeigt. Der im Klappdeckel 11 untergebrachte Sekundärkreis weist unter Anderem eine Leiterplatte 33 und einen Ferritkernabschnitt 39 auf. Bei geschlossenem Zustand des Klappdeckels 11 bilden die beiden Ferritkernabschnitte 28 und 39 einen lediglich durch zwei schmale Spalte unterbrochenen Ferrit-Ringkern. Die im Sekundärkreis erzeugte elektrische Energie dient zur Speisung mindestens einer Lichtquelle, welche hinter einem Lichtauslass 13 angeordnet ist.

In Fig. 2 ist eine perspektivische Ansicht einer elektrischen Steckdose mit Klappdeckel bei geschlossenem Zustand dargestellt. Es sind die elektrische Steckdose 1 mit Steckdoseneinsatz 2, Spreizkralle 7, Gehäuse 17 der Primär-Elektronik-Baugruppe, Klappdeckel 11 mit zwei Lichtauslässen 13 und der Abdeckrahmen 15 zu erkennen.

In Fig. 3 ist eine perspektivische Ansicht einer elektrischen Steckdose mit Klappdeckel bei geöffnetem Zustand dargestellt. Es sind die elektrische Steckdose 1 mit Steckdoseneinsatz 2, Spreizkralle 7, Gehäuse 17 der Primär-Elektronik-Baugruppe, Klappdeckel 11 mit zwei Lichtauslässen 13, die Zentralscheibe 9 inklusive Steckdosentopf und Erdungsbügel 5 sowie der Abdeckrahmen 15 zu erkennen.

In Fig. 4 ist eine perspektivische Ansicht eines Steckdoseneinsatzes dargestellt. Der Steckdoseneinssatz 2 weist in allgemein bekannter Weise Erdungsbügel 5, einen Tragring 6 und Spreizkrallen 7 auf. Das Gehäuse 17 der Primär-Elektronik-Baugruppe ist über Befestigungsmittel 30, vorzugweise Rasthaken respektive Rastmittel, am Steckdoseneinsatz 2 montiert. Zwei zur Umhüllung des Ferritkernabschnitts 28 dienende säulenförmige (zylinderförmige) Abdeckungen 29 sind Teil des Gehäuses 17 und überragen den Tragring 6.

In Fig. 5 ist eine perspektivische Ansicht eines Steckdoseneinsatzes bei teilweise geschnittenem Zustand dargestellt. Das Gehäuse 17 ist geöffnet, so dass die U-förmige Struktur "Seitenschenkel/Basisschenkel/Seitenschenkel" des Ferritkernabschnitts 28 zu erkennen ist. Die Sendespule 27 ist um den Basisschenkel des Ferritkernabschnitts 28 gewickelt, während die beiden Seitenschenkel innerhalb der säulenförmigen (zylinderförmigen) Abdeckungen 29 verlaufen. Des Weiteren sind der Tragring 6, eine Spreizkralle 7 und die Erdungsbügel 5 des Steckdoseneinsatzes 2 zu erkennen.

In Fig. 6 ist ein Gehäuse der Primär-Elektronik-Baugruppe dargestellt. Es sind die beiden säulenförmigen (zylinderförmigen) Abdeckungen 29 und die insgesamt vier Befestigungsmittel 30 des Gehäuses 17 zu erkennen, welche zur Montage am Steckdoseneinsatz 2 dienen.

Fig. 7 sind wesentliche Baukomponenten der Primär-Elektronik-Baugruppe dargestellt, und zwar der Ferritkernabschnitt 28 und die seinen Basisschenkel umschließende Sendespule 27.

In Fig. 8 ist ein Schnitt durch einen Steckdoseneinsatz dargestellt, wobei insbesondere der innerhalb des Gehäuses 17 angeordnete Basisschenkel des Ferritkernabschnitts 28 mit der ihn umschließenden Sendespule 27 gezeigt ist. Ferner ist eine der beiden säulenförmigen (zylinderförmigen) Abdeckungen 19 des Gehäuses 17 sowie der Tragring 6 und ein Erdungsbügel 5 des Steckdoseneinsatzes 2 zu erkennen.

In Fig. 9 ist eine perspektivische Ansicht der Oberseite eines Klappdeckels 11 mit den beiden Lichtauslässen 13 dargestellt.

In Fig. 10 ist eine perspektivische Ansicht der Unterseite eines Klappdeckels dargestellt, wobei das die Sekundär-Elektronik-Baugruppe umschließende Gehäuse 31, die beiden Lichtauslässe 13 und zwei Klappdeckel -Befestigungen 12 für die Montage des Klappdeckels 11 an der Zentralscheibe 9 gezeigt sind.

In Fig. 11 ist eine perspektivische Ansicht der Unterseite eines Klappdeckels 11 bei geöffnetem Gehäuse 31 der Sekundär-Elektronik-Baugruppe dargestellt. Neben den Klappdeckel-Befestigungen 12 (Scharniergelenke) sind die bereits unter Fig. 1 erwähnte, elektronische Baukomponenten der Sekundär-Elektronik-Baugruppe tragende Leiterplatte 33, der Ferritkernabschnitt 39 sowie eine diesen Ferritkernabschnitt 39 umschließende Empfangsspule 34 zu erkennen.

In Fig. 12 sind wesentliche Baukomponenten der Sekundär-Elektronik-Baugruppe dargestellt, und zwar der Ferritkernabschnitt 39 mit der ihn umschließenden Empfangsspule 34, deren Anschlüsse mit der Leiterplatte 33 verlötet sind, wobei die Leiterplatte 33 zweckmäßig auch zur Montage von zwei Lichtquellen 38, vorzugsweise zwei LEDs, dient, deren Licht durch die vorstehend erwähnten Lichtauslässe 13 strahlt, wodurch die Orientierungsbeleuchtung realisiert wird.

In Fig. 13 ist ein Schnitt durch eine elektrische Steckdose 1 mit Klappdeckel dargestellt, wobei
- der Steckdoseneinsatz 2 mit elektrischen Anschlussklemmen 3, Erdungsbügel 5, Tragring 6, Gehäuse 17 der Primär-Elektronik-Baugruppe mit Sendespule 27 und Ferritkernabschnitt 28,
- die Zentralscheibe 9 inklusive Steckdosentopf,
- der Klappdeckel 11 mit Gehäuse 31 der Sekundär-Elektronik-Baugruppe mit Empfangsspule 34, Ferritkernabschnitt 39 und Leiterplatte 33
- und der Abdeckrahmen 15
zu erkennen sind.

In Fig. 14 ist eine perspektivische Ansicht einer elektrischen Steckdose mit Klappdeckel bei entferntem Abdeckrahmen und teilweise geschnittenem Zustand dargestellt, wobei der Steckdoseneinsatz 2 mit Erdungsbügel 5, Tragring 6, Gehäuse 17 der Primär-Elektronik-Baugruppe mit Ferritkernabschnitt 28 und Abdeckung 29 und die Zentralscheibe 9 inklusive Steckdosentopf mit Klappdeckel-Befestigung 12 zu erkennen sind. Es wird deutlich, dass die Abdeckungen 29 mit den Seitenschenkeln der Ferritkernabschnitten 28 bis an die Unterseite der Zentralscheibe 9 reichen, um derart möglichst geringe Spalten zwischen den beiden Ferritkernabschnitten 28, 39 der beiden Elektronik-Baugruppen zu realisieren, was den Wirkungsgrad der induktiven Energieübertragung zwischen dem Primärkreis und dem Sekundärkreis verbessert.

In Fig. 15 ist eine Prinzip-Schaltskizze der induktiven Energieübertragungseinrichtung zwischen einem Primärkreis des Steckdoseneinsatzes und einem Sekundärkreis des Klappdeckels dargestellt. Primärkreis und Sekundärkreis bilden quasi einen Transformator mit Ferritkern, wie aus den nachfolgenden Erläuterungen näher hervorgeht.

Der durch die im Wesentlichen auf einer Leiterplatte 19 aufgebaute Primär-Elektronik-Baugruppe 18 realisierte Primärkreis weist zwei Netzanschlusskontakte 20 (zum Anschluss von Phase und Nulleiter) auf, welche über eine Gleichrichterdiode 21, einen Widerstand 22, einen elektronischen Schalter 24 und die um den Ferritkernabschnitt 28 gewickelte Sendespule (Primärspule) 27 miteinander verbunden sind. Ein Stützkondensator 23 liegt mit seinem einen Anschluss an der Verbindungsleitung zwischen Gleichrichterdiode 21 und elektronischem Schalter 24 und mit seinem weiteren Anschluss am Nulleiter. Ein Resonanzkondensator 26 kann optional zwischen elektronischem Schalter 24 und Sendespule 27 angeordnet sein. Die Ansteuerung des elektronischen Schalters 24 erfolgt mit einer Steuer- und Regelschaltung 25 vorzugsweise mit einer Frequenz größer als 20 kHz, um die bei der Übertragung entstehenden Geräusche durch magnetische Einflüsse in den nicht mehr vom Menschen wahrnehmbaren Bereich zu verlagern. Zudem ist der Wirkungsgrad für die Energieübertragung bei höheren Frequenzen deutlich verbessert. Die Konfiguration bestehend aus mit hoher Frequenz getaktetem elektronischem Schalter 24 und Sendespule 27 wird auch als "Hochfrequenzgenerator" bezeichnet.

Der im Klappdeckel 11 angeordnete Sekundärkreis wird durch die im Wesentlichen auf der Leiterplatte 33 aufgebaute Sekundär-Elektronik-Baugruppe 32 realisiert. Die beiden Anschlüsse der um den Ferritkernabschnitt 39 gewickelten Empfangsspule (Sekundärspule) 34 der Sekundär-Elektronik-Baugruppe sind über eine Gleichrichterdiode 36, einen Widerstand 37 und mindestens eine Lichtquelle 38, vorzugsweise zwei LEDs, miteinander verbunden.

Dabei ist es alternativ auch möglich, lediglich eine einzige Lichtquelle 38 vorzusehen, wobei die erforderliche Einstrahlung von Licht in den Lichtauslass respektive die Lichtauslässe 13 dann über biegsame Lichtwellenleiter erfolgt, welche an der Rückseite des Klappdeckels 11 verlaufen. Dabei kann (können) der Lichtauslass (die Lichtauslässe) 13 nicht nur an der Stirnseite des Klappdeckels 11 angeordnet sein, sondern über entsprechende Lichtleitung(en) auf der gesamten nach außen zeigenden Fläche des Klappdeckels 11. Anstelle einer LED kann bei dieser Ausführungsform auch eine Leuchtfolie zur Ausleuchtung der Fläche des Klappdeckels angeordnet sein.

Ein Resonanzkondensator 35 kann optional zwischen Empfangsspule 34 und Gleichrichterdiode 36 angeordnet sein. Bei Verwendung der Resonanzkondensatoren 26, 35 im Primärkreis und im Sekundärkreis werden zwei aufeinander abgestimmte Schwingkreise mit gleicher Resonanzfrequenz gebildet, was insbesondere bei höheren Frequenzen von Vorteil ist und den Wirkungsgrad der induktiven Energieübertragung erhöht.

Wie bereits aus den vorstehenden Erläuterungen hervorgeht, wird die Führung des magnetischen Kreises mittels eines Ferritkerns realisiert, dessen magnetische Übertragungsfähigkeit den verwendeten Frequenzen angepasst ist. Durch die vorteilhaft sehr enge Anordnung der einzelnen Ferritkernabschnitte wird die induktive Kopplung optimiert und es ergibt sich bei geschlossenem Zustand des Klappdeckels 11 ein einziger, lediglich durch zwei geringe Spalte unterbrochener Ferrit-Ringkern, welcher sowohl Sendespule 27 als auch Empfangsspule 34 trägt: Ferritkernabschnitt 28 mit Sendespule 27 - Spalt - Ferritkernabschnitt 39 mit Empfangsspule 34 - Spalt - Ferritkernabschnitt 28.

Dieser einen geschlossenen magnetischen Kreis bildende Ferrit-Ringkern weist vorteilhaft nur geringe magnetische Streufelder auf, was von Vorteil hinsichtlich der EMV (elektromagnetischen Verträglichkeit) ist. Wird der Klappdeckel 11 geöffnet, so arbeitet der Hochfrequenzgenerator im Leerlauf und kann auf eine sehr energiesparende Betriebsart zurückfahren. Erst wenn der Klappdeckel 11 wieder geschlossen wird, wird auch Energie zwischen Primärkreis und Sekundärkreis übertragen.

Auch wenn bei den vorstehend erläuterten Ausführungsbeispielen eine Unterputz-Steckdose behandelt wird, können in gleicher Art und Weise auch Aufputz-Steckdosen mit Klappdeckel mit der erfindungsgemäßen Orientierungsbeleuchtung versehen werden.

Dabei kann der magnetische Kreis selbstverständlich auch im Bereich des Scharniers des Klappdeckels angeordnet sein, wodurch auch bei aufgeklapptem Deckel der Magnetfluss nicht unterbrochen wird und die Lichtquelle auch in diesem Betriebszustand gespeist wird und leuchtet.

### Bezugszeichenliste

- 1: elektrische Steckdose (Unterputz)
- 2: Steckdoseneinsatz
- 3: elektrische Anschlussklemmen für Wechselspannungsnetz (Phase, Nulleiter, Schutzleiter)
- 4: Steckbuchsen
- 5: Erdungsbügel
- 6: Tragring
- 7: Spreizkralle
- 8: ---
- 9: Zentralscheibe inklusive Steckdosentopf
- 10: ---
- 11: Klappdeckel
- 12: Klappdeckel-Befestigung (Scharniergelenk)
- 13: Lichtauslass
- 14: ---
- 15: Abdeckrahmen
- 16: ---
- 17: Gehäuse der Primär-Elektronik-Baugruppe
- 18: Primär-Elektronik-Baugruppe der induktiven Energieübertragungsvor- richtung
- 19: Leiterplatte
- 20: Netzanschlusskontakte
- 21: Gleichrichterdiode
- 22: Widerstand
- 23: Stützkondensator
- 24: elektronischer Schalter
- 25: Steuer- und Regelschaltung
- 26: Resonanzkondensator (optional)
- 27: Sendespule
- 28: Ferritkernabschnitt (z. B. U-förmig mit Basisschenkel und zwei Seiten- schenkeln)
- 29: säulenförmige (zylinderförmige) Abdeckung
- 30: Befestigungsmittel (Rastmittel)
- 31: Gehäuse (Abdeckung) der Sekundär-Elektronik-Baugruppe
- 32: Sekundär-Elektronik-Baugruppe der induktiven Energieübertragungs- vorrichtung
- 33: Leiterplatte
- 34: Empfangsspule
- 35: Resonanzkondensator (optional)
- 36: Gleichrichterdiode
- 37: Widerstand
- 38: Lichtquelle (z. B zwei LEDs)
- 39: Ferritkernabschnitt zur Bildung eines Ferrit-Ringkerns mit schmalen Spalten

## Patentansprüche

1. Elektrische Steckdose mit Klappdeckel (11),
a) wobei mindestens eine Lichtquelle (38) im Klappdeckel (11) eingebaut ist,
b) wobei die Energieversorgung der mindestens einen Lichtquelle (38) mit Hilfe einer einen Primärkreis und einen Sekundärkreis aufweisenden induktiven Energieübertragungseinrichtung erfolgt,
c) wobei der Primärkreis der induktiven Energieübertragungseinrichtung im Steckdoseneinsatz (2) montiert ist und eine über einen elektronischen Schalter (24) mit einer hochfrequenten Spannung beaufschlagte Sendespule (27) aufweist,
d) wobei der Sekundärkreis der induktiven Energieübertragungseinrichtung im Klappdeckel (11) montiert ist und eine Empfangsspule (34) aufweist, an deren Klemmen eine über eine Gleichrichterdiode (36) gleichzurichtende Spannung zur Speisung der mindestens einen Lichtquelle (38) abgreifbar ist.

2. Steckdose nach Anspruch 1, **dadurch gekennzeichnet, dass** ein lediglich durch geringe Spalte unterbrochener Ferrit-Ringkern zur Führung des magnetischen Kreises vorgesehen ist, bestehend aus einem Ferritkernabschnitt (28) des Primärkreises mit umwickelter Sendespule (27) und einem Ferritkernabschnitt (39) des Sekundärkreises mit umwickelter Empfangsspule (34).

3. Steckdose nach Anspruch 1 oder 2, **dadurch gekennzeichnet, dass** der Primärkreis in Form einer in einem Gehäuse (17) befindlichen Primär-Elektronik-Baugruppe (18) realisiert ist, welches Gehäuse (17) mittels Befestigungsmittel (30) am Steckdoseneinsatz (2) montiert ist.

4. Steckdose nach den Ansprüchen 2 und 3, **dadurch gekennzeichnet, dass** der Ferritkernabschnitt (28) des Primärkreises U-förmig mit einem Basisschenkel und zwei Seitenschenkeln ausgebildet ist, wobei die Seitenschenkel in säulenförmigen Abdeckungen (29) des Gehäuses (17) geführt sind.

5. Steckdose nach einem der vorstehenden Ansprüche, **dadurch gekennzeichnet, dass** der Sekundärkreis in Form einer in einem Gehäuse (31) respektive unter einer Abdeckung befindlichen Sekundär-Elektronik-Baugruppe (32) realisiert ist, welches Gehäuse (31) respektive welche Abdeckung an der Rückseite des Klappdeckels (11) angeordnet ist.

6. Steckdose nach einem der vorstehenden Ansprüche, **dadurch gekennzeichnet, dass** zur Bildung von zwei aufeinander abgestimmten Schwingkreisen mit gleicher Resonanzfrequenz jeweils ein Resonanzkondensator (26, 35) im Primärkreis sowie im Sekundärkreis vorgesehen ist.

7. Steckdose nach einem der vorstehenden Ansprüche, **gekennzeichnet durch** eine aus mindestens einer LED gebildeten Lichtquelle (38).

8. Steckdose nach einem der vorstehenden Ansprüche, **gekennzeichnet durch** eine aus einer Leuchtfolie gebildeten Lichtquelle (38).

## Claims

1. Electric socket outlet with a hinged cover (11),
a) wherein at least one light source (38) is built into the hinged cover (11),
b) wherein the power supply to the at least one light source (38) is provided with the aid of an inductive power transmission device having a primary circuit and a secondary circuit,
c) wherein the primary circuit of the inductive power transmission device is fitted in the socket outlet insert (2) and has a transmission coil (27) to which a high-frequency voltage is applied via an electronic switch (24),
d) wherein the secondary circuit of the inductive power transmission device is fitted in the hinged cover (11) and has a reception coil (34), with it being possible for a voltage to be tapped off at the terminals of said reception coil, which voltage is to be rectified via a rectifier diode (36) and is intended for feeding the at least one light source (38).

2. Socket outlet according to Claim 1, **characterized in that** a ferrite toroidal core interrupted only by small gaps is provided for guiding the magnetic circuit, said ferrite toroidal core comprising a ferrite core segment (28) of the primary circuit with the transmission coil (27) wrapped around and a ferrite core segment (39) of the secondary circuit with the reception coil (34) wrapped around.

3. Socket outlet according to Claim 1 or 2, **characterized in that** the primary circuit is implemented in the form of a primary electronics assembly (18) located in a housing (17), which housing (17) is fitted on the socket output insert (2) by means of fastening means (30).

4. Socket outlet according to Claims 2 and 3, **characterized in that** the ferrite core segment (28) of the primary circuit is in the form of a U with a base limb and two side limbs, wherein the side limbs are guided in columnar coverings (29) of the housing (17).

5. Socket outlet according to one of the preceding claims, **characterized in that** the secondary circuit is implemented in the form of a secondary electronics assembly (32), which is located in a housing (31) or under a covering, which housing (31) or which covering is arranged on the rear side of the hinged cover (11).

6. Socket outlet according to one of the preceding claims, **characterized in that** in each case one resonant capacitor (26, 35) is provided in the primary circuit and in the secondary circuit so as to form two resonant circuits, tuned to one another, with the same resonant frequency.

7. Socket outlet according to one of the preceding claims, **characterized by** a light source (38) formed from at least one LED.

8. Socket outlet according to one of the preceding claims, **characterized by** a light source (38) formed from an electroluminescent film.

## Revendications

1. Prise électrique dotée d'un couvercle rabattable (11),
a) dans laquelle au moins une source de lumière (38) est incorporée dans le couvercle rabattable (11),
b) l'alimentation en énergie de la ou des sources de lumière (38) s'effectuant à l'aide d'un dispositif de transfert d'énergie par induction qui comporte un circuit primaire et un circuit secondaire,
c) le circuit primaire du dispositif de transfert d'énergie par induction étant monté dans la garniture (2) de la prise et présentant une bobine émettrice (27) alimentée par une tension en haute fréquence par l'intermédiaire d'un commutateur électronique (24),
d) le circuit secondaire du dispositif de transfert d'énergie par induction étant monté dans le couvercle rabattable (11) et présentant une bobine réceptrice (34) aux bornes de laquelle une tension redressée par une diode redresseuse (36) peut être prélevée pour alimenter la ou les sources de lumière (38).

2. Prise selon la revendication 1, **caractérisée en ce qu'**un noyau annulaire en ferrite interrompu uniquement par de petits interstices est prévu pour former le circuit magnétique constitué d'une partie (28) de noyau de ferrite du circuit primaire sur laquelle est enroulée la bobine émettrice (27) et d'une partie (39) de noyau de ferrite du circuit secondaire sur laquelle est enroulée la bobine réceptrice (34).

3. Prise selon les revendications 1 ou 2, **caractérisée en ce que** le circuit primaire est réalisé sous la forme d'un module électronique primaire (18) situé dans un boîtier (17), le boîtier (17) étant monté sur la garniture (2) de la prise à l'aide de moyens de fixation (30).

4. Prise selon les revendications 2 et 3, **caractérisée en ce que** la partie (28) du noyau de ferrite du circuit primaire est configurée en U avec une branche de base et deux branches latérales, les branches latérales étant guidées dans des couvercles (29) en forme de colonne du boîtier (17).

5. Prise selon l'une des revendications précédentes, **caractérisée en ce que** le circuit secondaire est réalisé sous la forme d'un module électronique secondaire (32) situé dans un boîtier (31) et en dessous d'un couvercle, le boîtier (31) ou le couvercle étant disposés sur le côté arrière du couvercle rabattable (11).

6. Prise selon l'une des revendications précédentes, **caractérisée en ce que** pour former deux circuits oscillants accordés l'un à l'autre et à même fréquence de résonance, des condensateurs de résonance (26, 35) sont prévus respectivement dans le circuit primaire et dans le circuit secondaire.

7. Prise selon l'une des revendications précédentes, **caractérisée par** une source de lumière (38) formée d'au moins une LED.

8. Prise selon l'une des revendications précédentes, **caractérisée par** une source de lumière (38) formée d'un film luminescent.
